# EUROPÄISCHE PATENTANMELDUNG

(11) **EP 1 103 183 A2**
(43) Veröffentlichungstag der Anmeldung: **30.05.2001**
(21) Anmeldenummer: 00123999.5
(22) Anmeldetag: 04.11.2000
(51) Int. Cl.: A21C 7/00

(54) **Wirk-Vorrichtung**

(30) Priorität: 17.11.1999 DE 19955293
(71) Anmelder: Werner & Pfleiderer Lebensmitteltechnik GmbH, 91550 Dinkelsbühl (DE)
(72) Erfinder: Meier, Alexander, 91602 Dürrwangen (DE)
(74) Vertreter: Rau, Manfred, Dr. Dipl.-Ing.

(57) **Zusammenfassung**

Eine Wirk-Vorrichtung weist ein Gehäuse (1) und eine in diesem gelagerte Wirktrommel (6) auf, die konzentrisch von einer Kammertrommel (7) umgeben wird. Ein Lager (20) der Kammertrommel (7) ist an einem Lager-Trag-Hebel (24) angebracht und zusammen mit diesem von der Kammertrommel (7) wegschwenkbar. Der Hebel (24) ist mittels einer Verriegelungs-Einrichtung (31) mit dem Gehäuse (1) lösbar verbindbar.

## Beschreibung

Die Erfindung betrifft eine Wirk-Vorrichtung nach dem Oberbegriff des Anspruches 1.

In der Praxis müssen in Wirk-Vorrichtungen die Kammertrommeln bei einem Produktwechsel, d.h. bei einer Änderung der Größe und/oder des Gewichts der Teigstücke, ausgewechselt werden. Die Lagerungen sind hierbei grundsätzlich festgeschraubt, d.h. zum Wechseln einer Kammertrommel muß die Verschraubung gelöst werden, woraufhin dann erst die Kammertrommel ausgetauscht werden kann.

Der Erfindung liegt die Aufgabe zugrunde, eine Wirk-Vorrichtung der gattungsgemäßen Art so auszugestalten, daß ein sehr schneller und einfacher Austausch der Kammertrommel ermöglicht wird.

Diese Aufgabe wird erfindungsgemäß durch die Merkmale im Kennzeichnungsteil des Anspruches 1 gelöst. Durch einfaches Lösen der Verriegelungs-Einrichtung kann die Verbindung zwischen Lager-Trag-Hebel und Gehäuse gelöst und der Lager-Trag-Hebel mitsamt der Lagerung der Kammertrommel weggeschwenkt werden, so daß diese frei abgezogen werden kann. Die Bedienung ist also außerordentlich einfach, da lediglich die Verriegelung mittels eines Betätigungsgriffes gelöst bzw. hergestellt werden muß.

Weitere zum Teil erfinderische Einzelheiten ergeben sich aus den Unteransprüchen.

Weitere Merkmale, Vorteile und Einzelheiten der Erfindung ergeben sich aus der Beschreibung eines Ausführungsbeispieles anhand der Zeichnung. Es zeigen:

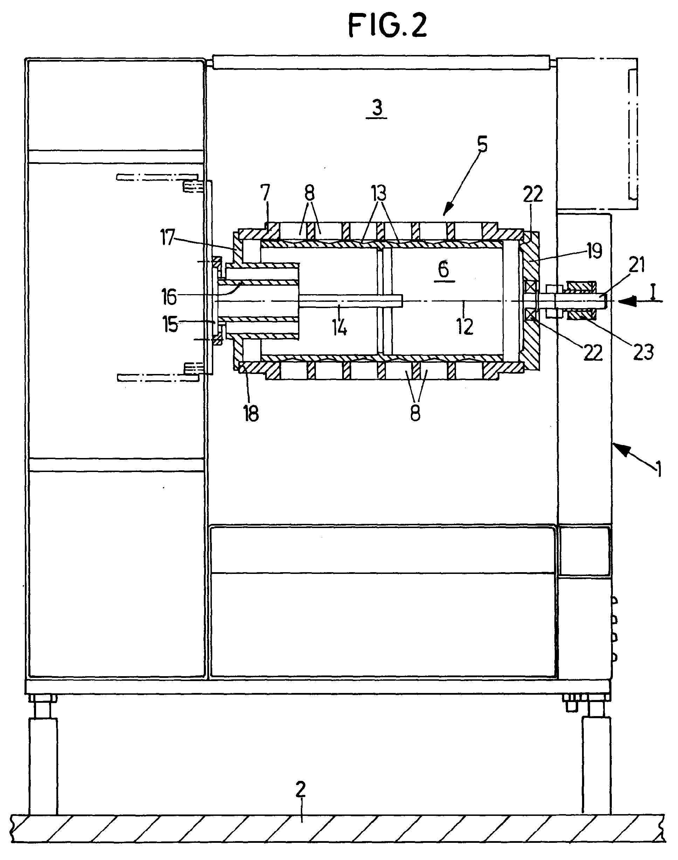

- Fig. 1: eine Seitenansicht einer Wirk-Vorrichtung nach der Erfindung, entsprechend dem Sichtpfeil I in Fig. 2,
- Fig. 2: eine Stirnansicht der Wirk-Vorrichtung gemäß dem Sichtpfeil II in Fig. 1 und
- Fig. 3: eine Draufsicht auf einen Lager-Trag-Hebel entsprechend dem Sichtpfeil III in Fig. 2.

Die in der Zeichnung dargestellte Wirk-Vorrichtung weist ein Gehäuse 1 auf, das auf dem Boden 2 abgestützt ist. Im oberen Bereich des Gehäuses 1 ist üblicherweise eine nur durch den geschlossenen Gehäusebereich angedeutete Teigteil-Vorrichtung 3 angeordnet, in der Teigstücke 4, sogenannte Teiglinge, mit einem vorgegebenen Volumen oder Gewicht gebildet werden. Eine solche Teigteil-Vorrichtung ist beispielsweise aus der EP 0 721 737 A (entspr. US-Patent 5,897,203) bekannt, worauf verwiesen werden darf.

Unterhalb der Teigteil-Vorrichtung 3 befindet sich eine Wirk-Einrichtung 5. Diese weist - insoweit wie üblich - eine Wirktrommel 6 auf, die konzentrisch von einer Kammertrommel 7 umgeben ist. In der Kammertrommel 7 sind nach außen und zur Wirktrommel 6 hin offene Wirkkammem 8 ausgebildet, in die die Teigstücke 4 abgelegt werden. Die Kammertrommel 7 ist über einen Teil ihres Umfangs von einem die Teigstücke 4 gegen die Wirktrommel 6 drückenden und am Herausfallen aus den Wirkkammem 8 hindernden Wirkband 9 umschlungen. Das endlos ausgebildete Wirkband 9 ist über verschiedene Umlenkrollen 10 und eine Spannrolle 11 geführt und wird von der umlaufend antreibbaren Kammertrommel 7 schlupffrei mitgenommen. Die Wirktrommel 6 ist in Richtung einer gemeinsamen Mittel-Längs-Achse 12 von Wirktrommel 6 und Kammertrommel 7 und in tangentialer Richtung, d.h. in Umfangsrichtung relativ zur Kammertrommel 7, also oszillierend bewegbar, so daß die in den Wirkkammem 8 befindlichen, einerseits gegen die Wirktrommel 6 und andererseits gegen das Wirkband 9 anliegenden Teigstücke 4 rundgewirkt werden. Die Teigstücke 4 liegen hierbei in verhältnismäßigen flachen, in der Oberfläche der Wirktrommel 6 als flache Einbuchtungen ausgebildeten Wirknäpfen 13. Aufbau und Wirkungsweise derartiger Wirk-Einrichtungen 5 sind allgemein bekannt, und zwar beispielsweise aus der DE-PS 11 26 333 (entspr. US-PS 3,152,039), worauf verwiesen wird.

Die Wirktrommel 6 ist auf einer einseitig im Gehäuse 1 gelagerten Antriebswelle 14 fliegend gelagert, die von einem nicht dargestellten Antriebsmotor über ein ebenfalls nicht dargestelltes Getriebe in der geschilderten Weise oszillierend angetrieben wird.

Die Kammertrommel 7 ist in einer einer Lagerung 15 der Antriebswelle 14 benachbarten Lagerung 16 frei drehbar gelagert, die einen Lagerdeckel 17 für die Kammertrommel 7 trägt, auf dem die Kammertrommel 7 über einen Zentrierbund 18 konzentrisch zur Achse 12 gehalten wird.

Am entgegengesetzten Ende der Kammertrommel 7 ist diese in einem weiteren Lagerdeckel 19 gelagert, der über ein Lager 20 frei drehbar in einem Lagerzapfen 21 abgestützt ist. Auch dieser Lagerdeckel 19 weist einen Zentrierbund 22 auf, auf dem die Kammertrommel 7 konzentrisch zur Achse 12 gehalten wird. Die Kammertrommel 7 ist also nicht fliegend, sondern an ihren beiden Enden gelagert. Der Lagerdeckel 19 ist am Lagerzapfen 21 in Richtung der Achse 12 festgelegt.

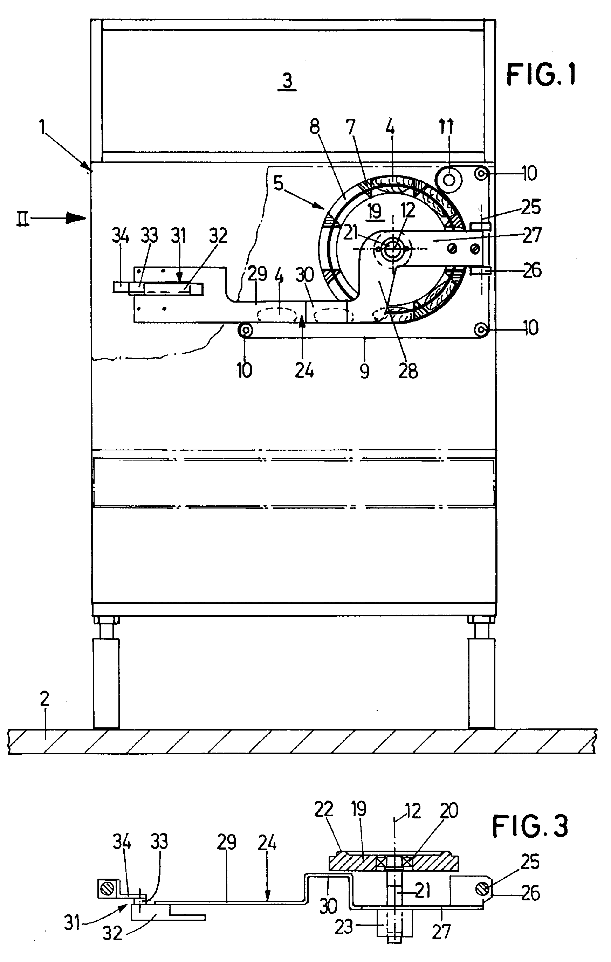

Der Lagerzapfen 21 ist über eine Halterung 23 an einem schwenkbaren Lager-Trag-Hebel 24 befestigt. Dieser Hebel 24 ist am Gehäuse 1 mittels eines um eine vertikale Schwenkachse 25 verschwenkbaren Schwenklagers 26 verschwenkbar angebracht. Er ist - wie insbesondere Fig. 1 entnehmbar ist - doppelt gekröpft ausgebildet. Ein oberer Hebelarm 27 erstreckt sich vom Lagerzapfen 21 horizontal zum Schwenklager 26. Vom Lagerzapfen 21 erstreckt sich ein abgekröpfter Hebelabschnitt 28 nach unten und von hier ein unterer Hebelarm 29 ebenfalls horizontal und entgegengesetzt zum oberen Hebelarm 27. Die Hebelarme 27 und 29 verlaufen etwa parallel zueinander und der abgekröpfte Hebelabschnitt 28 etwa vertikal zu diesen. Im unteren Hebelarm 29 ist ein in Richtung zur Kammertrommel 7 vorspringender Bereich ausgebildet, wodurch der Lager-Trag-Hebel 24 in Richtung der Achse 12 eine gewisse Feder-Elastizität erhält, während er aufgrund seiner in der Vertikalen flachen großflächigen Ausbildung in der Vertikalen völlig steif ist. Er weist also um die Achse 12 ein großes Flächenträgheitsmoment und damit hohe Biegesteifigkeit und in Richtung der Achse ein deutlich geringeres Flächenträgheitsmoment auf.

Im Bereich des freien Endes des Hebels 24 ist eine Verriegelungs-Einrichtung 31 vorgesehen, die einen am freien Ende des Hebelarms 29 angebrachten klinkenartigen Betätigungsgriff 32 mit einem Schloßriegel 33 und eine am Gehäuse 1 angebrachte Schließfalle 34 aufweist. Das freie Ende des Hebels 24 kann also fest aber leicht lösbar mit dem Gehäuse verbunden werden, d.h. er ist mit einem Ende im Schwenklager 26 gehäusefest angeordnet und kann durch Schließen der Verriegelungs-Einrichtung 31 an seinem anderen Ende ebenfalls gehäusefest fixiert werden. Aufgrund der Feder-Eigenschaft wird er in Richtung zur Wirktrommel 7 gedrückt, so daß bei verriegeltem Hebel 24 der Lagerdeckel 19 fest gegen die Kammertrommel 7 und in diese hineingepreßt und die Kammertrommel 7 wiederum gegen den Lagerdeckel 17 gedrückt wird.

Zum Austausch einer Kammertrommel 7 wird die Verriegelungs-Einrichtung 31 gelöst und der Lager-Trag-Hebel 24 samt Lagerdeckel 19 um das Schwenklager 26 nach außen geschwenkt. Dann kann die nur mit einem ganz kleinen Spiel auf der Wirktrommel 6 aufliegende Kammertrommel 7 abgezogen und durch eine andere Kammertrommel mit beispielsweise anders geformten Wirkkammem 8 ersetzt werden. Anschließend wird der Hebel 24 mit dem Lagerdeckel 19 wieder in seine Schließstellung zurückgeschwenkt, wobei der Lagerdeckel 19 mit seinem Zentrierbund 22 in die Kammertrommel 7 eingreift. Wegen des nur sehr kleinen Spiels zwischen Kammertrommel 7 und Wirktrommel 6 greift der Zentrierbund 22 in die Kammertrommel 7 ein; das System ist selbstzentrierend.

## Patentansprüche

1. Wirk-Vorrichtung mit
- einem Gehäuse (1),
- einer im Gehäuse (1) drehbar gelagerten Wirktrommel (6) und
- einer die Wirktrommel (6) konzentrisch zu einer gemeinsamen Mittel-Längs-Achse (12) umgebenden Kammertrommel (7), die
-- beidendig in Lagerungen (16) gelagert und
-- gegenüber den Lagerungen (16) lösbar ist,
**dadurch gekennzeichnet,**
**daß** eine Lagerung an einem von der Kammertrommel (7) wegschwenkbaren Lager-Trag-Hebel (24) angebracht ist und
**daß** der Lager-Trag-Hebel (24) mittels einer Verrriegelungs-Einrichtung (31) mit dem Gehäuse (1) lösbar verbindbar ist.

2. Wirk-Vorrichtung nach Anspruch 1, **dadurch gekennzeichnet,**
**daß** die Kammertrommel (7) beidendig auf Lagerdeckeln (17, 19) zur Achse (12) zentriert und in Richtung der Achse (12) abziehbar gehalten ist.

3. Wirk-Vorrichtung nach Anspruch 2, **dadurch gekennzeichnet,**
**daß** ein Lagerdeckel (19) an dem Lager-Trag-Hebel (24) gelagert ist.

4. Wirk-Vorrichtung nach einem der Ansprüche 1 bis 3, **dadurch gekennzeichnet,**
**daß** der Lager-Trag-Hebel (24) an einem Ende mittels eines Schwenklagers (26) mit dem Gehäuse (1) verbunden ist und an seinem anderen Ende mittels der Verriegelungs-Einrichtung (31) lösbar mit dem Gehäuse (1) verbindbar ist.

5. Wirk-Vorrichtung nach Anspruch 4, **dadurch gekennzeichnet, daß** die Verriegelungs-Einrichung (31) einen Betätigungsgriff (32) aufweist.

6. Wirk-Vorrichtung nach einem der Ansprüche 1 bis 5, **dadurch gekennzeichnet,**
**daß** der Lager-Trag-Hebel (24) in der Vertikalen biegesteif ist.

7. Wirk-Vorrichtung nach einem der Ansprüche 1 bis 6, **dadurch gekennzeichnet,**
**daß** der Lager-Trag-Hebel (24) in Richtung der Achse (12) federelastisch ist.

8. Wirk-Vorrichtung nach einem der Ansprüche 1 bis 7, **dadurch gekennzeichnet,**
**daß** der Lager-Trag-Hebel (24) abgekröpft mit einem oberen Hebelarm und einem unteren Hebelarm (29) ausgebildet ist, wobei die Schließ-Einrichtung (31) dem unteren Hebelarm (29) zugeordnet ist.
